**Europäisches Patentamt**

**European Patent Office**

**Office européen des brevets**

(19)

(11) Numéro de publication : **0 506 506 A1**

# (12) DEMANDE DE BREVET EUROPEEN

(21) Numéro de dépôt : **92400658.8**

(22) Date de dépôt : **12.03.92**

(51) Int. Cl.$^5$ : **H01S 3/06,** G02F 1/29, H01S 3/094

(30) Priorité : **25.03.91 FR 9103592**

(43) Date de publication de la demande :
**30.09.92 Bulletin 92/40**

(84) Etats contractants désignés :
**AT BE CH DE DK ES FR GB GR IT LI LU MC NL PT SE**

(71) Demandeur : **GAZ DE FRANCE**
**23, rue Philibert Delorme**
**F-75017 Paris (FR)**

(72) Inventeur : **Facq, Paul**
**73, rue des Fougères**
**F-87350 Panazol (FR)**
Inventeur : **Di Bin, Philippe**
**65, avenue Montjouis**
**F-87100 Limoges (FR)**
Inventeur : **Zongo, Paul-Hubert**
**7 Bis rue du Petit Limoges**
**F-87270 Couzeix (FR)**

(74) Mandataire : **Lerner, François**
**5, rue Jules Lefèbvre**
**F-75009 Paris (FR)**

(54) **Fibre optique à réseau de Bragg interne variable et ses applications.**

(57)    L'invention concerne un composant à fibre optique. Il comporte une fibre optique dont le coeur est constitué d'un matériau devenant amplificateur de lumière par pompage optique.

Il comporte de plus des moyens de production de l'onde de pompe sous forme d'un champ d'interférence variable comportant des strates sur une partie au moins du coeur de la fibre optique.

Ce composant permet l'extraction et l'injection d'une fraction sélectionnée du flux lumineux guidé par la fibre.

FIG.2

EP 0 506 506 A1

L'invention concerne le domaine des fibres optique à réseau de Bragg variable, en orientation et en réflectivité chromatique avec des applications en tant que déflecteur, extracteur sélectif de flux, injecteur de lumière, coupleur à fibre optique et capteur à fibre optique, en particulier.

Le développement des fibres optiques et de leurs applications ont suscité la mise au point de composants à base de fibres remplissant les mêmes fonctions ou au moins des fonctions analogues à celles usuellement remplies par les composants optiques traditionnels.

D'autres composants à fibre optique sont plus spécifiques et il est difficile de trouver leurs correspondants en optique traditionnelle.

C'est ainsi qu'ont été développées des fibres optiques à réseau de Bragg.

De telles fibres sont décrites dans les brevets américains US-A-4 725 110, US-A-4 806 012 et US-A-4 807 950.

Selon la technique décrite dans ces documents, une fibre, en verre ou en silice dopée au germanium est traitée de manière à constituer à l'intérieur de celle-ci un réseau de Bragg.

Ce réseau est constitué de strates parallèles, planes d'indice constant,l'indice varie d'une strate à l'autre, et ses variations sont périodiques et la période est représentée par la période spatiale I. Tous les paramètres de ces réseaux sont constants ( longueur, période spatiale au repos, orientation...).

Il est montré, dans ces documents, que le flux lumineux d'une onde signal couplée dans la fibre, réfléchi par un tel réseau de Bragg a des caractéristiques fonctions de sa période spatiale.

La période spatiale, est déterminée par les conditions de fabrication du réseau de Bragg. Elle est susceptible d'être légèrement modifiée lorsque la fibre est soumise à des contraintes longitudinales.

Le réseau de Bragg, permanent, est obtenu en soumettant une fibre optique au réseau d'interférences dit aussi réseau de franges, produit par l'intersection de deux faisceaux ultraviolets provenant d'une même source.

Les différentes strates de la fibre sont soumises à des éclairements variables qui entraînent des modifications correspondantes définitives d'indice fonction, en chaque point, de l'éclairement reçu. La répartition de l'intensité dans les franges d'interférence étant sinusoïdale, de période spatiale I, elles produisent des variations d'indice de même période.

La période spatiale et la longueur du réseau de Bragg sont donc déterminées par les conditions de production de l'interférence (angle des faisceaux, position de la fibre par rapport aux franges lors de l'illumination ...).

Il est souligné dans ces documents de l'art antérieur que ces fibres comportant des réseaux de Bragg sont susceptibles d'être utilisées comme jauge de contrainte. En effet, lorsque la fibre est soumise à des contraintes longitudinales, la période spatiale du réseau de Dragg est modifiée, ce qui entraîne une modification des caractéristiques du flux réfléchi. l'analyse de ce flux permet dont d'isoler une grandeur fonction de la contrainte longitudinale à laquelle la fibre est soumise. Il est également souligné que le flux réfléchi par le réseau de Bragg dépend également de la température et que l'utilisation de deux réseaux de Bragg, éventuellement superposés, permet d'isoler la contribution de la contrainte longitudinale à la modification des caractéristiques de flux réfléchi.

L'objectif de la présente invention est la conception d'un nouveau composant optique comportant au moins une fibre à réseau de Bragg interne dont l'orientation des strates et la réflectivité chromatique peuvent être variables et qui, à la différence des strates des fibres de l'art antérieur précité (US-A-4 725 110...) , est à strates "temporaires" ou "éphémères", les modifications de l'indice de réfraction produites par l'éclairement de la fibre n'étant pas irréversibles ou définitives. Un tel composant permet la réalisation de nombreuses fonctions et mesures.

Ainsi, et plus précisément, le composant optique de l'invention va donc comporter :

– une fibre optique ayant au moins un coeur et une gaine, le coeur étant constitué d'un matériau devenant amplificateur de lumière par pompage optique,

– et des moyens de production d'onde(s) de pompe générant dans la fibre au moins un champ d'interférence variable, ce champ comportant des franges optiques créant, dans le matériau amplificateur de ladite fibre, des strates s'étendant sur une partie au moins du coeur de cette dernière.

Le champ d'interférence ainsi généré ne sera donc présent que tant que les onde de pompe seront présentes. En d'autres termes, il disparaîtra lorsque la fibre ne sera plus éclairée.

Ainsi, dans l'invention, deux caractéristiques se combinent :

a) tout d'abord, le matériau qui constitue le coeur de la fibre présente des caractéristiques d'amplification optique, permettant à ce coeur d'agir en tant qu'amplificateur de lumière, et ce par pompage optique, et

b) les strates créées lors de l'éclairement sont éphémères en ce qu'elles disparaissent lorsque la fibre n'est plus éclairée, étant ainsi liées aux caractéristiques des ondes de pompe appliquées à la fibre.

De surcroît, une autre caractéristique de l'invention prévoit qu'avantageusement, les strates étant réparties périodiquement, leur fréquence spatiale (ou "pas") et/ou leur indice de réfraction seront variables dans le temps, en fonction essentiellement de l'intensité, de la longueur d'onde et/ou de l'angle d'inclinaison entre elles des ondes de pompe, ainsi que de la nature du matériau choisi pour la constitution du coeur (en ce qui concerne l'indice de réfraction). En pratique le composant de l'invention pourra jouer le rôle de filtre optique par variation du champ d'interférence.

Un tel champ d'interférence pourra en outre, de façon complémentaire, avoir une position, une longueur et/ou une inclinaison variables sur une partie au moins du coeur de la fibre.

De manière préférée les moyens de production du champ d'interférence de l'onde de pompe comportent des moyens de production et de séparation d'un flux incident en deux ondes et des moyens de recombinaison de ces deux ondes, les moyens de recombinaison permettent d'ajuster la période spatiale et le nombre de strates ainsi que leur position et leur inclinaison par rapport la fibre.

Les caractéristiques du champ d'interférence peuvent être directement contrôlées de manière à agir sur une onde signal couplée à la fibre optique.

Dans d'autres modes de réalisation les caractéristiques du champ d'interférence et donc du réseau de Bragg dépendent d'un ou de plusieurs paramètres extérieurs. Le flux guidé dans la fibre est utilisé pour mesurer à distance les caractéristiques du réseau et ainsi connaître le ou les paramètres extérieurs dont elles dépendent.

Dans certains modes de réalisation les moyens de production du champ d'interférence de l'onde de pompe comportent au moins un prisme agissant sur l'une des deux ondes et permettant d'ajuster la période spatiale et l'orientation des franges.

Avant de donner une description plus détaillée de l'invention en référence aux dessins annexés, on rappelera que la technique du "pompage optique" consiste en la mise d'un milieu en état d'inversion de population atomique en vue d'y créer l'amplification d'ondes lumineuses. Ceci est en particulier obtenu en illuminant le milieu par au moins une onde lumineuse dite "onde de pompe" dont la longueur d'onde correspond avantageusement à des raies d'absorption du milieu amplificateur. Dans le cadre d'un tel pompage, le milieu retrouve quasiment son état initial (avant pompage) après un temps de relaxation habituellement de l'ordre de la ms. les puissances optiques nécessaires pour ces pompages sont en général de l'ordre du milliwatt (mW). A titre de comparaison, l'obtention de champs d'interférences variables temporaires, essentiellement dans des guides planaires (voir par exemple publication EP-A-0 254 509) à partir d'effets non linéaires, nécessite des puissances optiques de l'ordre du mégawatt (MW) voire du gigawatt (GW). Les matériaux dopants utilisés sont différents et les temps de relaxation alors beaucoup plus courts.Et les applications sont différentes.

Ceci ayant été précisé, on remarquera que dans les dessins annexés :
– La figure 1 est un schéma de principe du dispositif de l'invention
– La figure 2 représente un mode d'ajustement et de contrôle des franges
– La figure 3 représente un premier mode de réalisation des interférences
– La figure 4 représente un deuxième mode de réalisation des interférences
– La figure 5 représente un troisième mode de réalisation des interférences
– La figure 6 représente un quatrième mode de réalisation des interférences.
– La figure 7 représente un premier mode de réalisation d'interférences parallèles à l'axe de la fibre.
– La figure 8 représente un deuxième mode de réalisation d'interférences parallèles à l'axe de la fibre.

L'invention met en oeuvre une fibre optique dont le coeur est constitué d'un milieu actif susceptible d'être donc optiquement pompé. L'indice du coeur d'une telle fibre, pour une longueur d'onde donnée de l'onde signal qui lui est couplée, est fonction de l'éclairement qu'il reçoit à une longueur d'onde donnée dite longueur d'onde de pompe. De plus l'onde signal est amplifiée.

L'illumination adaptée d'une telle fibre par un réseau de franges d'intensité lumineuses variables, à l'onde de pompe, produit des stratifications de gain. Ces variations de gain, qui sont réversibles, produisent pour l'onde signal des variations d'indice de réfraction elles-mêmes réversibles ou éphémères.

Cette propriété est mise en oeuvre pour réaliser à l'intérieur d'une fibre optique des réseaux de Bragg dont l'ensemble des propriétés : existence même, longueur totale du réseau, période spatiale, orientation du réseau par rapport à l'axe de la fibre sont contrôlables et variables.

Le composant ainsi constitué est susceptible de recevoir des applications nombreuses et variées. Il peut constituer l'un des éléments d'un déflecteur, d'un polariseur, d'un coupleur, d'un capteur...

Ce composant comporte une fibre optique 1 ayant un coeur 2 et une gaine 3. Le coeur est constitué d'un matériau amplificateur.

Par ailleurs il comporte également des moyens de production d'interférences 4 de période spatiale et de position variables sur une partie au moins du coeur 2 de la fibre optique 1.

Les franges d'interférence constituent des variations périodiques d'éclairement dans la direction 5 l'axe de la fibre optique. Ces variations d'éclairement produisent par l'action du milieu actif constitutif du coeur 2 de la fibre 1 des variations de l'indice de réfraction du coeur dans la direction de l'axe 5.

Ainsi un flux lumineux 6 couplé dans la fibre optique 1 rencontre ces variations périodiques d'indice qui constituent un réseau de Bragg 7.

Ce réseau de Bragg 7 agit sur le flux 6, réfléchissant une partie de celui-ci lorsque les strates constitutives du réseau de Bragg sont perpendiculaires à l'axe de la fibre, produisant l'extraction hors du coeur de la fibre d'une partie de ce flux 6 lorsque ces strates sont inclinées par rapport à l'axe 5 de la fibre 1.

Inversement il permet le couplage d'un flux lumineux dans la fibre.

L'interférence de deux faisceaux lumineux de pompe, à la longueur d'onde λ, incliné l'un par rapport à l'autre d'un angle 2θ permet d'obtenir un champ d'interférence de période spatiale :

$$I = \frac{\lambda_p}{2n\sin\theta}$$

où n est l'indice du mileu et $\lambda_p$ la longueur d'onde des faisceaux dits faisceaux de pompe dans ce milieu.

La proportion du flux lumineux extrait par rapport au flux lumineux incident sur le réseau de Bragg est fonction de la longueur d'onde du flux incident 6 et de l'intensité de l'onde de pompe.

Comme déjà mentionné, une caractéristique importante de l'invention veut que le réseau de Bragg 7 soit produit au moment même où les franges d'interférence 4 de l'onde de pompe sont formées et qu'il disparaîsse lorsque ces franges sont supprimées. De manière analogue ce réseau de Bragg a des caractéristiques qui évoluent lorsque les caractéristiques des franges d'interférence varient.

De nombreux moyens sont susceptibles d'être mis en oeuvre tant pour la production des franges d'interférence 7 que pour la variation ou l'ajustement de leurs propriétés.

On utilise de préférence des franges d'interférence à deux ondes. De telles franges sont produites par séparation d'un flux lumineux incident $\Phi$ en deux ondes $\Phi_1$ et $\Phi_2$ puis en recombinaison de ces deux ondes $\Phi_1$ et $\Phi_2$ au niveau de la fibre 1.

Les franges d'interférence sont obtenues dans de bonnes conditions, c'est-à-dire qu'elles sont planes avec une bonne précision, lorsque la fibre est placée dans un milieu d'indice proche du sien et ayant au moins une surface de contact plane, avec l'air ou le milieu dans lequel se propage les ondes de pompe. La fibre peut être introduite dans un élément de silice percé d'un trou prévu à cet effet, (on peut réaliser un trou d'un diamètre de 128μm environ pour des fibres d'un diamètre de 125μm). Un liquide ou gel d'indice assure la continuité d'indice entre ce bloc et la gaine de la fibre.

La fibre peut aussi être placée dans un milieu liquide ayant un indice proche de celui de sa gaine.

Ainsi les faisceaux de pompe ne traversent qu'un dioptre plan avant d'interférer.

La variation ou l'ajustement des franges d'interférence peut tout d'abord être produits par le déplacement relatif des franges d'interférence 4 et de la fibre 1. Une translation de la fibre parallèlement aux strates du réseau de franges d'interférence c'est-à-dire aussi du réseau de Bragg modifie la longueur du réseau de Bragg et donc la fraction du flux incident 6 extrait ou réfléchi par le réseau de Bragg 7, ainsi que la bande passante chromatique du réseau.

La mesure à distance de ce flux réfléchi ou extrait permet donc de connaître les positions relatives des franges d'interférence 4 et de la fibre 1 et de connaître, par là, un paramètre extérieur P susceptible d'agir sur cette position relative.

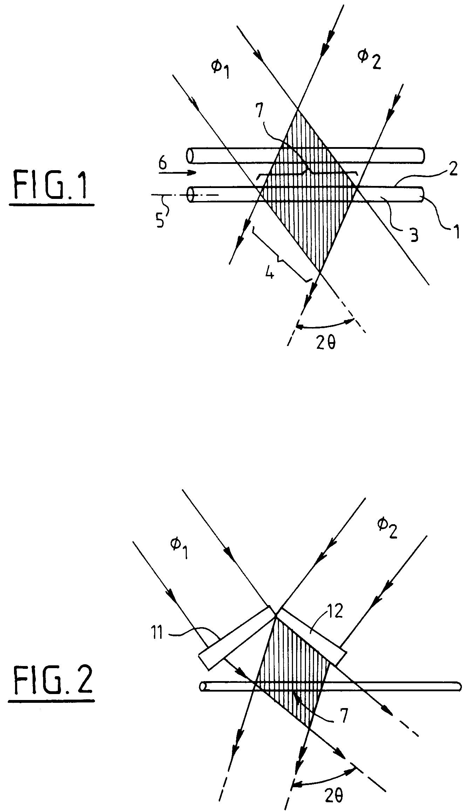

Dans un autre mode de réalisation représenté à la figure 2 un ou plusieurs prismes 10, 11 peuvent être placés respectivement sur les deux ondes avant la production des interférences. La présence, ou l'orientation de ces prismes produit une modification des conditions d'interférence et, des franges produites et donc du réseau de Bragg.

Il est également possible d'interposer sur l'une au moins des ondes un diasporamètre constitué d'un couple de prismes contre-rotatifs permettant la constitution de composants analogues à un prisme dont l'angle serait continûment variable. La variation de cet angle agit sur les propriétés des interférences produites donc du réseau de Bragg et par là permet de modifier la période spatiale et/ou l'orientation des strates du réseau de Bragg et donc permet la mesure de l'angle relatif des prismes constitutifs du diasporamètre et d'un paramètre P extérieur éventuel produisant une variation de cet angle.

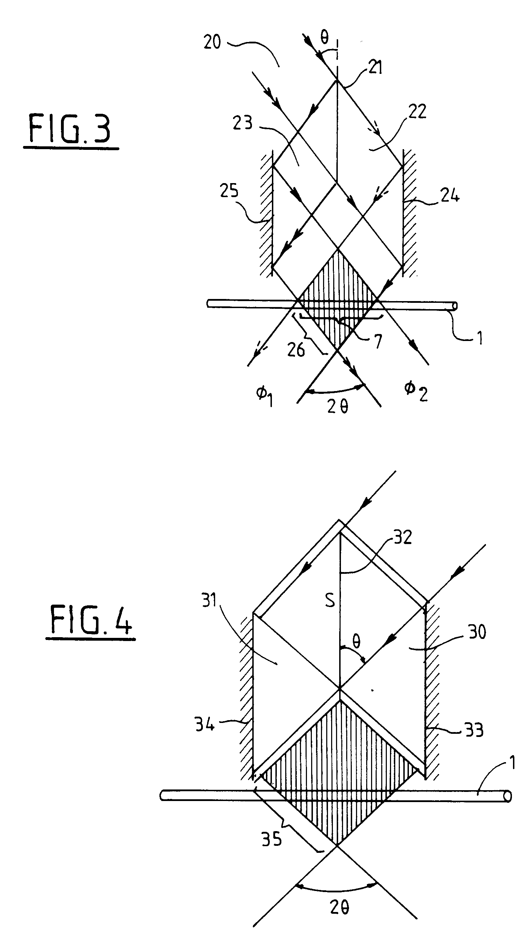

- La figure 3 représente un mode de réalisation particulièrement simple permettant l'obtention des franges d'interférence au niveau de la fibre 1. Un flux incident 20 formant un faisceau parallèle est décomposé par une lame semi-transparente 21 en deux ondes 22, 23 approximativement perpendiculaires. Chacune de ces ondes est réfléchie par un miroir respectivement 24, 25 approximativement parallèle à la lame semi-transparente 21. Les faisceaux 22 et 23 se recombinent et forment les franges d'interférence 26. Une modification des orientations relatives de la lame semi-transparente 21, des miroirs 24 et 25 produit une variation de l'angle des faisceaux 22 et 23 lors de leur recombinaison et donc une variation de la période spatiale des interférences formées. Ces positions relatives de la lame semi-transparente 21, des miroirs 24 et 25 peuvent être représentatives d'un paramètre à mesurer P.

Le dispositif représenté sur la figure 4 est un dispositif monolithique, réalisé à partir de deux parallélépi-

EP 0 506 506 A1

pèdes 30, 31 permettant la formation de la lame semi-transparente 32, des miroirs 33 et 34 et formant un système optique analogue à celui décrit plus haut en référence à la figure 3. Toutefois ce dispositif est très stable et peu sensible à d'éventuelles vibrations externes. La position globale de ce composant agit sur la position relative des franges d'interférence 35 par rapport à la fibre 1 permettant de contrôler et d'ajuster tant la longueur du réseau de Bragg que sa période spatiale et/ou son orientation par rapport à l'axe de la fibre.

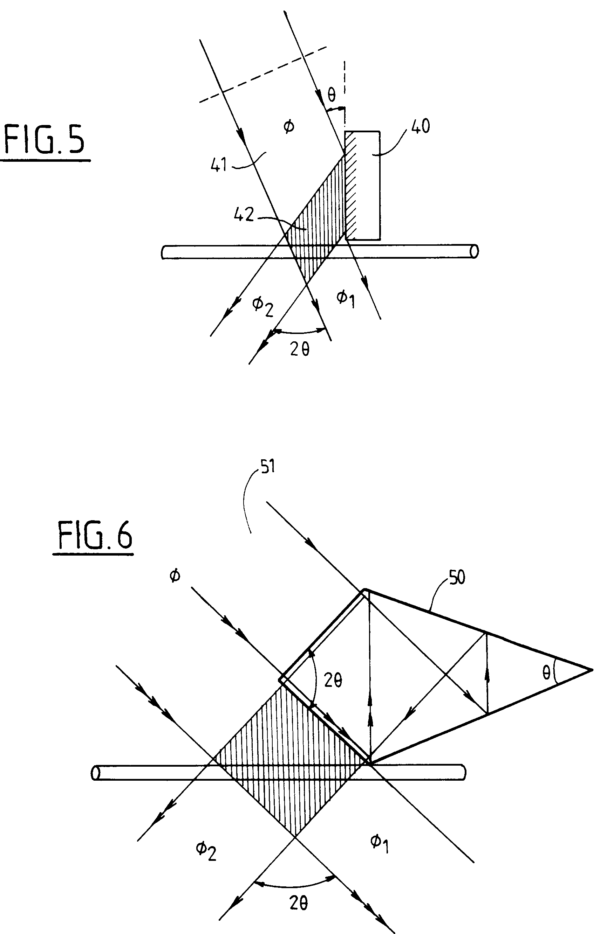

Dans le dispositif représenté sur la figure 5 un miroir 40 intercepte une partie d'un faisceau parallèle 41 et produit des franges d'interférence 42 entre le faisceau direct, non intercepté par le miroir 40 et le faisceau réfléchi par ce miroir 40. Ce dispositif est d'une très grande simplicité.

Dans le dispositif représenté sur la figure 6 une équerre optique 50 produit l'interférence d'une partie du flux parallèle 51 intercepté par cette équerre avec le flux directement transmis. L'angle des faisceaux interférents, $2\theta$ résulte de l'angle de l'équerre $\theta$ fixé par construction et donc particulièrement stable.

Les caractéristiques du champ d'interférence peuvent être directement contrôlées de manière à agir sur une onde de signal couplée à la fibre optique.

Dans d'autres modes de réalisation les caractéristiques du champ d'interférence et donc du réseau de Bragg dépendent d'un ou de plusieurs paramètres extérieurs. Le flux couplé à la fibre est utilisé pour mesurer à distance les caractéristiques du réseau et ainsi connaître le ou les paramètres extérieurs dont elles dépendent.

Dans ces différents dispositifs, le contrôle de l'intensité de la source de pompe ou l'interposition d'atténuations sur l'un ou sur les deux faisceaux de pompe avant recombinaison permet d'agir sur l'intensité et sur le contraste des interférences produites et par là, sur la part du flux de l'onde signal défléchie ou extraite et sur le taux d'amplification de cette onde signal. par ailleurs la période spatiale des interférences de l'onde de pompe détermine la longueur d'onde centrale de la bande spectrale sur laquelle le réseau de Bragg est actif; le nombre de strates formées détermine la largeur de bande.

Il est également possible d'agir sur la longueur d'onde de l'onde de pompe.

Différents matériaux sont en eux-mêmes connus pour la réalisation des fibres actives et peuvent être utilisés pour la fabrication du coeur des fibres mises en oeuvre selon l'invention. Le tableau suivant donne, pour un certain nombre de matériaux, le dopant préférentiellement utilisé, la longueur d'onde d'utilisation $\lambda_u$ et la longueur d'onde de pompe $\lambda_p$ qui est mise en oeuvre pour réaliser les interférences dans ces dispositifs:

| Matériau fibre | Dopants | $\lambda_u$ (nanomètre) | $\lambda_p$ (nanomètre) Longueur d'onde de pompe. |
|---|---|---|---|
| Verre au Fluorure de Zirconium | Erbium +++ $E_r$ | 850 | 801 |
| Verre au Fluorure de Zirconium | Néodyme +++ $N_d$ | 1300 1338 | 795 |
| Silice $S_iO_2 + G_eO_2$ ou bien $S_iO_2 + G_eG_2 + Al_2O_3$ | Erbium ++++ $E_r$ | 1550 1536 | 1470 - 1510; 1480 514 ; 532 800 - 825 ; 820 980 |

De préférence,

– soit le coeur de la fibre optique est en verre au fluorure de zirconium dopé à l'Erbium, les franges d'interférence sont formées à une longueur d'onde comprise entre 790 et 820 nm et le composant est destiné à être utilisé à une longueur d'onde comprise entre 810 et 860 nm.

– soit le coeur de la fibre optique est en verre au fluorure de zirconium dopé au Néodyme, les franges d'interférence sont formées à une longueur d'onde comprise entre 780 et 820 nm et le composant est destiné à être utilisé à une longueur d'onde comprise entre 1250 nm et 1350 nm .

– soit le coeur de la fibre optique est en silice dopé à l'Erbium, les franges d'interférence sont formées à une longueur d'onde comprise entre 500 et 1510 nm et le composant est destiné à être utilisé à une longueur d'onde comprise entre 1490et 1570 nm.

La disposition essentielle de l'invention est donc la réalisation dans le coeur de fibres optiques de réseaux de Bragg éphémères c'est-à-dire qui ne se maintiennent que lorsque le coeur de ces fibres est soumis à un éclairement variable, périodique dans le sens de l'axe de la fibre. Il permet la modulation en temps réel des propriétés du réseau de Bragg ainsi produit et reçoit de nombreuses applications. Ce procédé est applicable aux fibres monomodes et aux fibres multimodes.

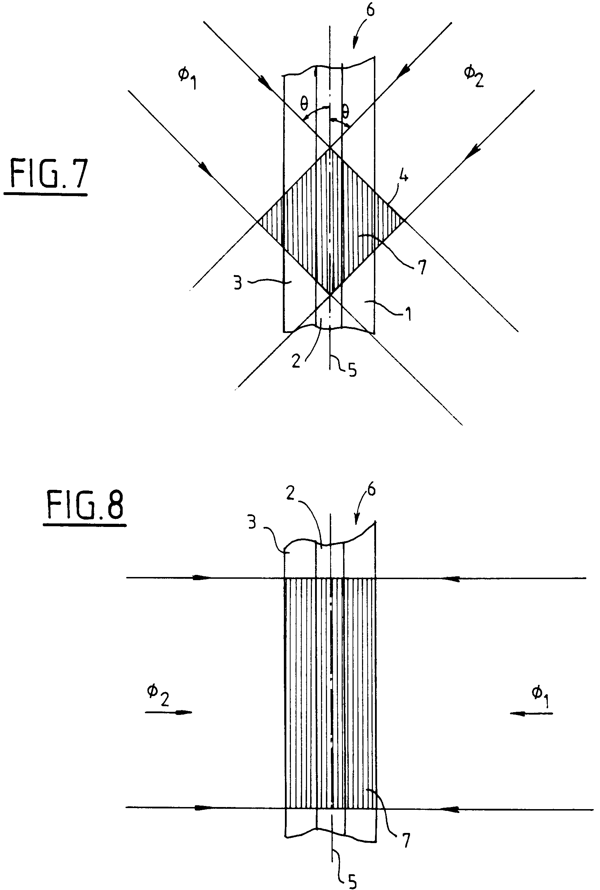

Lorsque le champ d'interférence variables est parallèle à l'axe de la fibre, le réseau de Bragg polarise, au moins partiellement l'onde signal guidée dans la fibre. Un tel champ d'interférence est obtenu, comme représenté sur les figures 7 et 8 soit en plongeant dans le champ d'interférence de deux faisceaux de pompe cylindriques de manière à ce que l'axe de la fibre soit parallèle aux strates d'interférence des deux faisceaux par l'interférence de deux faisceaux dont la bissectrice des axes est parallèle à l'axe de la fibre (figure 7) soit par l'interférence de deux faisceaux, parallèles de directions opposées, à l'axe de la fibre (figure 8).

Le polarisateur ainsi réalisé est variable. Il peut entre-autre tourner autour de l'axe de la fibre.

Des strates faiblement inclinées parallèlement à l'axe de la fibre peuvent créer des déflexions quasi rasante ; constituant des extracteurs ou injecteur-coupleur de lumière.

Chaque réseau de Bragg réfléchissant ou défléchissant une partie seulement du flux signal couplé dans la fibre, un grand nombre de réseaux est susceptible d'être placé en série sur la même fibre permettant la mesure d'un grand nombre de paramètres. ou, l'extraction chromatiquement sélective de canaux faisant partie d'un ensemble de canaux ou multiplex chromatique circulant dans la fibre, sans perturbation des autres canaux. L'extraction comportant le réseau de Bragg peut être caractérisé par sa réponse spectrale, elle-même représentée par sa longueur d'onde centrale $\lambda_c$ et sa largeur de bande $\Delta\lambda_c$. La variabilité du réseau de Bragg permet le contrôle de $\lambda_c$ et de $\Delta\lambda_c$ qui déterminent les canaux sélectionnés (leur longueur d'onde et leur nombre). De manière analogue, symétriquement, il est possible d'insérer des canaux chromatiques dans une fibre sans perturber les autres canaux du multiplex.

De plus un éclairement de la fibre, continu ou superposé à l'éclairement périodique produit l'amplification de l'onde signal avec une très large bande passante. Cela permet la multiplication, pour une intensité fixe de la source, du nombre de capteurs mis en oeuvre ou autorise l'augmentation de la portée du réseau de capteurs.

## Revendications

1. Composant optique comportant une fibre optique ayant au moins un coeur et une gaine, caractérisé en ce que le coeur est constitué d'un matériau devenant amplificateur de lumière par pompage optique, à ce composant étant associés des moyens de production d'ondes de pompe générant dans la fibre au moins un champ d'interférence variable présent tant que les ondes de pompe sont produites et comportant des franges créant dans ledit matériau amplificateur de lumière des strates sur une partie au moins du coeur de la fibre.

2. Composant optique selon la revendication 1 caractérisé en ce que les strates sont périodiques, leur fréquence spatiale et/ou leur indice de réfraction étant variable(s) dans le temps, en fonction de l'intensité, de la longueur d'onde et/ou de l'inclinaison entre-elles desdites ondes de pompe.

3. Composant optique selon l'une des revendications 1 ou 2, caractérisé en ce que l'inclinaison des strates du champ d'interférence par rapport à l'axe de la fibre est variable.

4. Composant optique selon l'une quelconque des revendications 1 à 3, caractérisé en ce que la longueur de la fibre sur laquelle est formé le champ d'interférence généré par les ondes de pompe est variable.

5. Composant optique selon l'une quelconque des revendications 1 à 4, caractérisé en ce que la position du champ d'interférence, par rapport à la fibre est variable.

6. Composant optique selon l'une quelconque des revendications 1 à 5, caractérisé en ce que la longueur d'onde des ondes de pompe est variable.

7. Composant optique selon l'une quelconque des revendications 1 à 6, caractérisé en ce que les moyens pour générer les franges comportent des moyens de séparation d'un flux lumineux incident en deux ondes et des moyens de recombinaison de ces deux ondes, les moyens de recombinaison permettant d'ajuster la période spatiale et la position des franges par rapport à la fibre.

8. Composant optique selon la revendication 7, caractérisé en ce que les moyens pour générer les franges comportent au moins un prisme, agissant sur l'une des deux ondes et permettant d'ajuster la période spatiale et l'orientation des franges.

9. Composant optique selon la revendication 7, caractérisé en ce que les moyens pour générer les franges comportent au moins un miroir, agissant sur l'une des deux ondes et permettant d'ajuster la période spatiale et l'orientation des franges.

10. Composant optique selon l'une quelconque des revendications 1 à 9, caractérisé en ce que le coeur de la fibre optique est en verre au fluorure de zirconium dopé à l'Erbium, les franges d'interférence étant formées à une longueur d'onde comprise entre 790 et 820 nm et ledit composant étant destiné à être utilisé à une longueur d'onde comprise entre 810 et 860 nm.

11. Composant optique selon l'une quelconque des revendications 1 à 9, caractérisé en ce que le coeur de la fibre optique est en verre au fluorure de zirconium dopé au Néodyme, les franges d'interférence étant formées à une longueur d'onde comprise entre 780 et 820 nm et ledit composant étant destiné à être utilisé à une longueur d'onde comprise entre 1250 nm et 1350 nm .

12. Composant optique selon l'une quelconque des revendications 1 à 9, caractérisé en ce que le coeur de la fibre optique est en silice dopé à l'Erbium, les franges d'interférence étant formées à une longueur d'onde comprise entre 1450 et 1510 nm et ledit composant étant destiné à être utilisé à une longueur d'onde comprise entre 1490 et 1570 nm.

13. Composant optique selon l'une quelconque des revendications 1 à 9, caractérisé en ce que le coeur de la fibre optique est en silice dopée à l'Erbium, les franges d'interférence étant formées à une longueur d'onde comprise entre 800 et 1000 nm et ledit composant étant destiné à être utilisé à une longueur d'onde comprise entre 1490 et 1570 nm.

14. Composant optique selon l'une quelconque des revendications 1 à 9, caractérisé en ce que le coeur de la fibre optique est en silice dopée à l'Erbium, les franges d'interférence étant formées à une longueur d'onde comprise entre 500 et 550 nm et ledit composant étant destiné à être utilisé à une longueur d'onde comprise entre 1490 et 1570 nm.

15. Composant optique selon l'une quelconque des revendications 1 à 14, caractérisé en ce que les strates du champ d'interférence variables sont parallèles à l'axe de la fibre.

FIG.1

FIG.2

FIG.3

FIG.4

FIG.5

FIG.6

FIG.7

FIG.8

Office européen
des brevets

**RAPPORT DE RECHERCHE EUROPEENNE**

Numero de la demande

EP    92 40 0658

Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | IBM TECHNICAL DISCLOSURE BULLETTIN. vol. 14, no. 7, Décembre 1971, NEW YORK US pages 2035 - 2036; K.S. PENNINGTON ET AL.: 'Fast amplifying opto-optical switch' * le document en entier * | 1-6 | H01S3/06 G02F1/29 H01S3/094 |
| A | LEOS '90 CONFERENCE PROCEEDINGS vol. 2, 4 Novembre 1990, BOSTON,MASSACHUSETTS US pages 96 - 97; G.A. BALL ET AL: 'Fiber laser incorporating internal Bragg reflectors' * le document en entier * | 1,7,15 | |
| A | WO-A-8 601 303 (UNITED TECHNOLOGIES CORP.) * abrégé * | 1,9,15 | |
| D | & US-A-4 725 110 | | |
| A,D | EP-A-0 254 509 (BRITISH TELECOMMUNICATIONS) * abrégé * | 1,7 | |
| | | | DOMAINES TECHNIQUES RECHERCHES (Int. Cl.5) |
| A | ELECTRONICS LETTERS. vol. 26, no. 22, 25 Octobre 1990, STEVENAGE GB pages 1871 - 1873; C.A. MILLAR ET AL.: 'Efficient up-conversion pumping at 800nm of an Erbium-doped fluoride fibre laser operating at 850 nm' * abrégé * | 1,10 | H01S G02F G02B |
| A | ELECTRONICS LETTERS. vol. 26, no. 5, 1 Mars 1990, STEVENAGE GB pages 329 - 330; M. BRIERLEY ET AL.: 'Amplification in the 1300 nm telecommunications window in a Nd-doped fluoride fibre' * abrégé * | 1,11 | |

-/--

Le présent rapport a été établi pour toutes les revendications

| Lieu de la recherche | Date d'achèvement de la recherche | Examinateur |
|---|---|---|
| LA HAYE | 02 JUILLET 1992 | BATTIPEDE F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)

EP 0 506 506 A1

**Office européen des brevets**

# RAPPORT DE RECHERCHE EUROPEENNE

Numero de la demande

EP   92 40 0658
Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | APPLIED PHYSICS LETTERS. vol. 57, no. 25, 17 Décembre 1990, NEW YORK US pages 2635 - 2637; Y. KIMURA ET AL.: 'Ultra efficient Erbium-doped fiber amplifier' * abrégé * | 1,12,13 | |
| A | OFC 1990 TECNICAL DIGEST SERIES, VOLUME 1 CONFERENCE EDITION, PAPER FA3 22 Janvier 1990, SAN FRANCISCO,CALIFORNIA US C.-Y. CHEN ET AL.: 'High gain Erbium doped fiber amplifier and tunable Erbium doped fiber laser pumped at 532 nm' * le document en entier * | 1,14 | |

DOMAINES TECHNIQUES RECHERCHES (Int. Cl.5)

Le présent rapport a été établi pour toutes les revendications

| Lieu de la recherche | Date d'achèvement de la recherche | Examinateur |
|---|---|---|
| LA HAYE | 02 JUILLET 1992 | BATTIPEDE F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

13